**Europäisches Patentamt**

**European Patent Office**

**Office européen des brevets**

(11) Numéro de publication : **0 353 197 B1**

(12)
# FASCICULE DE BREVET EUROPEEN

(45) Date de publication du fascicule du brevet :
**13.05.92 Bulletin 92/20**

(51) Int. Cl.$^5$ : **G01G 17/06,** G01G 13/06, G01G 13/29, G01G 13/295, B65B 3/28

(21) Numéro de dépôt : **89810570.5**

(22) Date de dépôt : **26.07.89**

(54) **Procédé de dosage pondéral.**

(30) Priorité : **29.07.88 CH 2897/88**

(43) Date de publication de la demande :
**31.01.90 Bulletin 90/05**

(45) Mention de la délivrance du brevet :
**13.05.92 Bulletin 92/20**

(84) Etats contractants désignés :
**BE CH DE ES FR GB IT LI NL SE**

(56) Documents cités :
**EP-A- 0 166 562**
**EP-A- 0 251 754**
**BE-A- 623 067**

(56) Documents cités :
**DE-A- 3 201 221**
**DE-A- 3 332 236**
**US-A- 4 222 448**
**US-A- 4 381 545**

(73) Titulaire : **CYDEC ENGINEERING S.A.**
**Rue des Uttins 27**
**CH-1400 Yverdon-les-bains (CH)**

(72) Inventeur : **Fornerod, André**
**En Loup**
**CH-1411 Giez (CH)**

(74) Mandataire : **Hranitzky, Wilhelm Max et al**
**c/o WILLIAM BLANC & CIE Conseils en**
**Propriété Industrielle SA 6, rue de la Grotte**
**CH-1003 Lausanne (CH)**

Jouve, 18, rue Saint-Denis, 75001 PARIS

## Description

La présente invention a pour objet un procédé de dosage pondéral pour la fabrication industrielle d'un produit à plusieurs composants liquides ou pâteux et son installation de mise en oeuvre.

Le dosage pondéral traditionnel d'un mélange à plusieurs composants est obtenu en transférant les composants les uns après les autres dans un récipient disposé sur une balance et en mesurant en continu le poids du composant transféré. Afin d'obtenir une bonne précision, ce type de dosage nécessite un transfert lent du composant lorsque l'on s'approche du poids prescrit. En particulier, pour la fabrication industrielle d'un produit à plusieurs composants, notamment lorsque le nombre de composants est élevé, le dosage pondéral traditionnel se révèle un procédé d'autant plus lent que la précision demandée est grande et que le nombre de composants est grand.

On a cherché à améliorer la précision du dosage d'un mélange par des procédés à dosage dit volumétrique, en utilisant des cylindres préalablement étalonnés. Toutefois, du fait de la taille nécessairement limitée de ces cylindres, le dosage volumétrique ne permet pas d'effectuer un dosage rapide pour des grandes quantités.

Il a aussi été proposé de combiner le dosage pondéral et le dosage volumétrique dans un même procédé de façon à obtenir un premier dosage pondéral rapide pour des quantités sensiblement inférieures aux dosages requis et de compléter le mélange par un procédé de dosage volumétrique.

Toutefois, ces procédés nécessitent des installations de mise en oeuvre passablement encombrantes et relativement coûteuses. D'autre part, un dosage volumétrique ne permet pas facilement de tenir compte des conditions instantanées de pression, de température et d'humidité qui existent au moment de la mesure.

Un dispositif de laboratoire pour hôpitaux ou pharmacies pour le transfert d'un liquide est décrit dans la demande de brevet européen publiée sous no 0 166 562. Le procédé comporte 4 étapes principales. Pendant la première étape, on transfère une quantité de liquide inférieure au dosage requis. Dans une seconde étape, on transfère une quantité additionelle incrémentale de liquide correspondant à un intervalle de temps fixé et le poids de cette quantité de liquide additionelle est déterminé. Dans une troisième étape la quantité manquante de liquide dans le récipient est déterminée et le temps nécessaire au passage de la quantité maquante calculé, puis la quantité manquante est transférée dans une quatrième étape.

Le but de la présente invention est de proposer un procédé de dosage pour la fabrication industrielle d'un produit à plusieurs composants liquides ou pâteux qui, bien que basé sur le principe d'un dosage purement pondéral, permette d'obtenir très rapidement le dosage requis avec une très grande précision, quels que soient le nombre de composants et leurs quantités.

A cet effet, l'invention concerne un procédé de dosage pondéral pour la fabrication industrielle d'un produit à plusieurs composants liquides ou pâteux à l'aide d'une installation comportant au moins une valve de dosage, présentant les caractéristiques énoncées à la revendication 1. Des caractéristiques correspondant à des formes d'exécution particulières du procédé sont spécifiées dans les revendications du procédé subordonnées à la revendication 1.

L'invention concerne également une installation pour la mise en oeuvre de ce procédé, telle que définie dans la partie caractérisante de la revendication 4. Des caractéristiques correspondant à des formes d'exécution particulières de l'installation sont spécifiées dans les revendications subordonnées à la revendication 4.

Etant basé sur un principe de dosage purement pondéral, le procédé de l'invention présente l'avantage de pouvoir être mis en oeuvre avec une installation simple, peu encombrante et peu coûteuse. Il permet de tenir compte des conditions instantanées de tous les facteurs influant sur le poids des composants, tels que la température et la pression extérieures, la viscosité et l'humidité du composant, etc. Le procédé de l'invention permet un dosage ultra rapide et précis, quel que soit le nombre de composants, même au-delà de 50 composants.

D'autre avantages et caractéristiques favorables du procédé selon l'invention ressortiront plus clairement de la description qui suit, donnée à titre d'exemple, et en se référant au dessin sur lequel :

la fig. 1 est un schéma de principe d'un exemple d'une installation selon l'invention, et
la fig. 2 est un schéma de principe d'un second exemple d'installation selon l'invention.

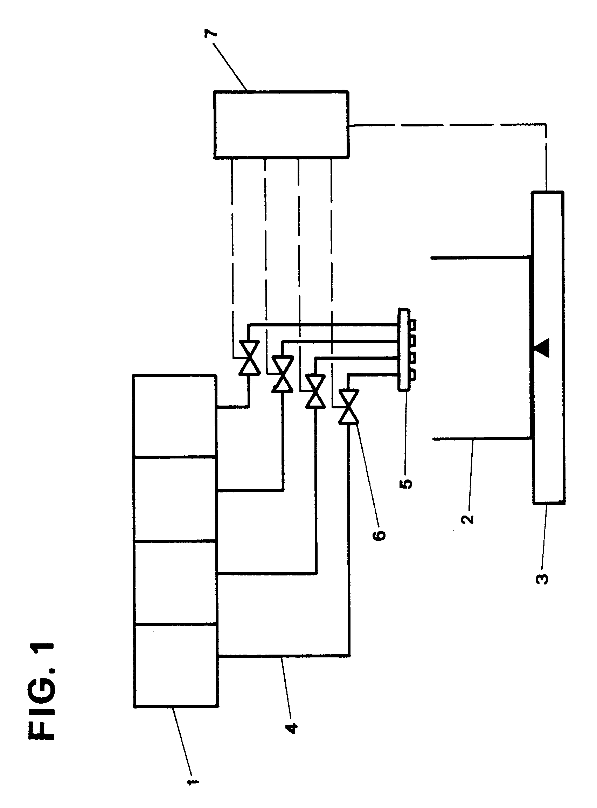

L'installation de dosage représentée à la figure 1 est destinée à la fabrication d'un produit à quatre composants. Les composants à doser sont entreposés dans des récipients de stockage 1. Un récipient de réception 2 du mélange est disposé sur une balance 3. Les composants à mélanger sont transférés du récipient 1 dans le récipient 2 par des conduits 4 dont les extrémités sont regroupées sur une tête de dosage 5 située au-dessus du récipient de réception 2. Chaque conduit 4 est muni d'une valve de dosage 6 dont le mécanisme de fonctionnement est commandé par un dispositif électronique 7 programmable, par exemple un ordinateur, lui-même connecté au dispositif de mesure de la balance. On choisira de préférence une valve de dosage à action progressive (servo-valve, valve à effet proportionnel, servo-distributeur, etc.), qui permet de diminuer progressivement et automatiquement son ouverture à l'approche du dosage grossier prédéterminé, de façon à éviter les oscillations de la balance qui sont provoquées lors d'une ouverture ou une fermeture brusque de la valve. Chaque valve peut être asservie par un électro-aimant de commande à action proportionnelle qui reçoit les informations de la balance par l'intermédiaire de l'ordinateur. En outre, un capteur de position transmet en tout temps à l'ordinateur la position d'ouverture de la valve de dosage.

Les paramètres du dosage sont préalablement introduits dans l'ordinateur. On mémorise également dans la mémoire de l'ordinateur les paramètres d'ouvertures unitaires de chacune des valves (durée, amplitude) qui seront utilisées lors du remplissage complémentaire impulsionnel de chaque composant, ainsi que le nombre d'impulsions souhaitées pour la détermination du poids d'une ouverture unitaire (par exemple 10, 20 ou 30). Le procédé est ensuite entièrement commandé de façon automatique par l'ordinateur.

La première étape consiste à transférer successivement dans le récipient de réception des quantités de chaque composant inférieures aux quantités prescrites, par exemple le 95 % du poids requis, en utilisant le dispositif d'ouverture et de fermeture progressive de la valve. Lorsque la valve est refermée, après stabilisation de la balance, l'ordinateur mémorise le poids de chaque composant. Lorsque tous les composants du mélange ont été dosés grossièrement on effectue pour chacun d'eux un calibrage de la dose unitaire. Cette opération consiste à mesurer le poids du composant passant à travers la valve qui lui est associée en lui imposant une ouverture d'amplitude et de durée déterminées. Afin de tenir compte des divers problèmes de précision de tous ordres, la mesure du poids de la quantité du composant n'est pas effectuée après une seule ouverture de la valve, mais après n ouvertures de la valve (par exemple 10, 20 ou 30). L'ordinateur détermine alors le poids de la dose unitaire ou petite dose en faisant par exemple le quotient du poids total obtenu par le nombre d'ouvertures de la valve. Bien entendu, le poids de la petite dose peut également être déterminé à l'aide de toute autre formule mathématique bien connue dans le domaine du calcul de mesures moyennes. Le poids de la petite dose est alors pris en compte par l'ordinateur qui va définir le nombre de petites doses à rajouter pour obtenir le solde du poids requis du composant. La même opération est répétée pour tous les autres composants. L'ordinateur commande alors les ouvertures unitaires de chaque valve de façon à compléter la quantité manquante du dosage de chaque composant. Cette opération peut s'effectuer simultanément pour tous les composants de façon à gagner du temps.

Selon la précision souhaitée, l'étape de dosage pondéral fin décrite ci-dessus peut être répétée pour l'un ou plusieurs des composants en imposant à la valve correspondante une ouverture unitaire d'amplitude et/ou de durée inférieure(s) à celle(s) imposée(s) à la précédente ouverture unitaire de ladite valve, et ainsi de suite jusqu'à obtenir un dosage à la précision souhaitée pour tel ou tel composant.

Outre les avantages de simplicité et de rapidité du procédé, le calibrage de l'ouverture unitaire de chacune des valves décrit ci-dessus ayant lieu en cours de dosage, il permet de tenir compte de tous les facteurs d'influence instantanés, tels que température, pression, humidité, viscosité, etc. Bien entendu, dans le cas où un échantillonage doit précéder une production, ce calibrage pourrait également être effectué sur un poste d'échantillonage, avant l'opération de dosage de production et ne pas être répété après le dosage grossier de chacun des composants.

D'autre part, lorsqu'on dispose d'une installation comportant un poste d'échantillonage séparé, le calibrage de chaque composant peut s'effectuer sur le poste d'échantillonage sitôt après le dosage grossier de chaque composant, de façon à gagner du temps. Le calibrage de la valve associée au premier composant s'effectue sur le poste d'échantillonage sitôt après le dosage grossier de ce premier composant, pendant qu'a lieu le dosage grossier du deuxième composant sur le poste de production, etc.

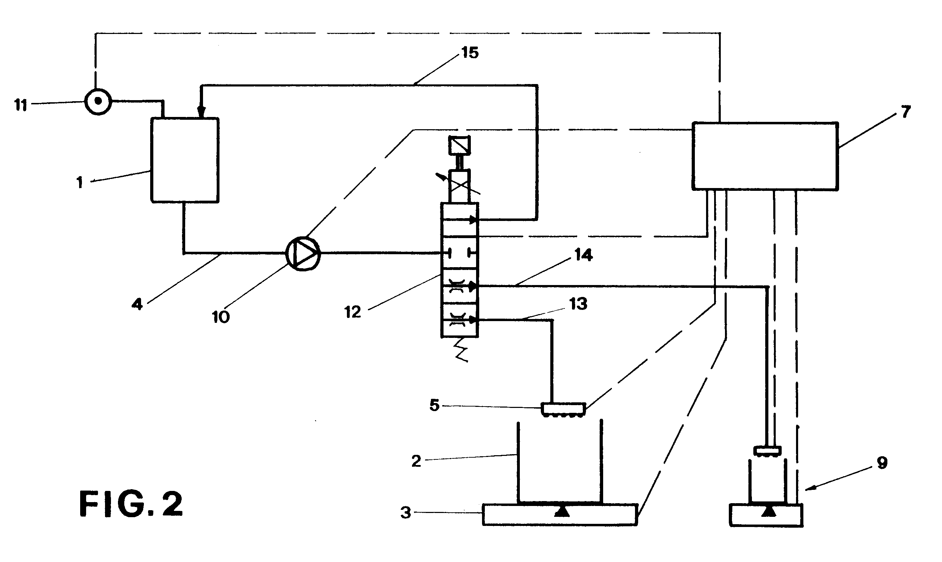

On a représenté à la figure 2 le schéma de principe d'une installation de dosage comportant des valves de dosage 12 à plusieurs sorties, comme par exemple une sortie 13 pour le poste de dosage-production, une sortie 14 pour le poste de dosage-échantillonage et une sortie 15 de recirculation du composant. On peut également utiliser une valve de dosage à effet proportionnel combiné avec une valve tout ou rien. Afin de s'implifier la figure, on a représenté le circuit de fonctionnement d'un seul composant aboutissant à la tête de dosage. Bien entendu, il existe autant de tels circuits que de composants, tous aboutissant à la tête de dosage. L'installation représentée comporte en outre un poste d'échantillonage 9 séparé ainsi qu'un circuit de recirculation du composant.

Le composant à doser peut être transféré dans le récipient de réception soit par gravité comme représenté à la figure 1, soit, comme représenté à la figure 2, par pompage à l'aide d'une pompe 10 insérée sur le conduit, cette pompe étant notamment nécessaire pour la recirculation, ou par pression 11 sur le récipient de stockage.

La tête de dosage 5 permet de regrouper dans un diamètre minimum tous les composants de l'installation. Pour chaque composant, la tête de dosage peut être équipée d'une buse d'éjection assurant une étanchéité parfaite du conduit, et qui peut être pilotée soit par la pression du composant, soit électriquement ou pneumatiquement. Son ouverture/fermeture peut être commandée en parallèle avec l'ouverture/fermeture de la valve. Ce dispositif permet d'éviter les erreurs dues aux queues de chute. Il permet également de remplacer l'élément anti-fuite de la valve. Bien entendu, lors de la commande des ouvertures unitaires impulsionnelles des valves, lors du calibrage de la petite dose ou lors du dosage pondéral fin, il peut être difficile voire impossible de commander une ouverture/fermeture de la buse d'éjection de façon aussi rapide que celle de la valve. On peut alors prévoir de programmer l'ouverture/fermeture de la buse de façon à ce qu'elle s'ouvre lors de la première impulsion et qu'elle se ferme après la dernière impulsion d'ouverture unitaire de la valve.

## Revendications

1. Procédé de dosage pondéral pour la fabrication industrielle d'un produit à plusieurs composants liquides ou pâteux, à l'aide d'une installation comportant au moins une valve de dosage (6, 12), caractérisé en ce qu'il comporte les étapes suivantes :

a) on transfère successivement dans un récipient des quantités de chaque composant inférieures aux dosages requis de chaque composant et on mesure le poids de la quantité de chaque composant transféré avant de transférer le composant suivant,

b) on mesure successivement le poids de chaque composant passant à travers la valve de dosage (6, 12) qui lui est associée pendant au moins une ouverture unitaire d'amplitude et de durée déterminée et on détermine par calcul dans chaque cas le poids d'une dose unitaire du composant,

c) on complète simultanément ou successivement les quantités manquantes des dosages de chacun des composants en transférant dans le récipient (2) des nombres de doses unitaires égaux aux résultats respectifs des divisions de chacun des poids des quantités manquantes par le poids d'une dose unitaire correspondante,

d) on répète éventuellement les étapes b) et c) pour l'un ou plusieurs des composants en imposant pour chacun des composants concernés une ouverture unitaire de la valve de dosage (6, 12) qui lui est associée d'amplitude et/ou de durée inférieure(s) à celle(s) imposée(s) à la précédente ouverture unitaire pour ledit composant, jusqu'à obtenir un dosage de précision déterminée pour chaque composant concerné.

2. Procédé selon la revendication 1, caractérisé en ce que l'on effectue l'opération de détermination des poids des doses unitaires des composants avant l'opération de dosage pondéral grossier des composants.

3. Procédé selon l'une des revendications précédentes, caractérisé en ce que l'on effectue en outre une mesure finale du poids total du produit transféré et que l'on compare la valeur obtenue avec le poids requis.

4. Installation de dosage, caractérisée en ce qu'elle comporte un récépient de réception (2) disposé sur une balance (3), au moins un conduit (4) de transfert d'un composant muni d'une valve de dosage (6, 12), relié à l'une de ses extrémités à un récipient de stockage (1), son autre extrémité étant disposée au-dessus du récipient de réception du mélange, et un dispositif électronique (7) programmé conformément au procédé selon la revendication 1, auquel sont connectés le mécanisme de commande de la valve ainsi que le dispositif de mesure de la balance.

5. Installation selon la revendication 4, caractérisée en ce que la valve de dosage est une valve à ouverture et fermeture progressive.

6. Installation selon l'une des revendications 4 ou 5, caractérisée en ce qu'elle comporte une pluralité de conduits de transfert (4), chacun d'eux étant muni d'une valve de dosage (6), les extrémités libres de chaque conduit étant regroupées sur une tête de dosage (5) disposée au-dessus du récipient de réception du mélange.

7. Installation selon l'une des revendications 4 à 6, caractérisée en ce que le composant est transféré du récipient de stockage au récipient de réception par gravité.

8. Installation selon l'une des revendications 4 à 6, caractérisée en ce que le composant est transféré du récipient de stockage au récipient de réception par injection à l'aide d'une pompe.

9. Installation selon l'une des revendications 6 à 8, caractérisée en ce que la tête de dosage est équipée de buses d'éjection dont l'ouverture est commandée automatiquement par le dispositif électronique (7), en fonction de l'ouverture de la valve correspondante, ou par pression du composant lors de l'ouverture de la valve correspondante.

## Patentansprüche

1. Verfahren zur Gewichtsdosierung für die industrielle Herstellung eines Produkts mit mehreren flüssigen oder teigigen Komponenten, mit Hilfe einer Anlage, welche mindestens ein Dosierventil (6, 12) aufweist, dadurch gekennzeichnet, dass es die folgenden Schritte umfasst:

a) Es werden nacheinander Mengen jeder Komponente, die kleiner sind als die erforderlichen Dosen jeder Komponente, in einen Behälter übergeführt und das Gewicht der Menge jeder übergeführten Komponente vor der Überführung der folgenden Komponente gemessen;

b) Es wird aufeinanderfolgend das Gewicht jeder Komponente, die durch das ihr zugeordnete Dosierventil (6, 12) durchgeht, während mindestens einer Einheitsöffnung von bestimmter Amplitude und Dauer gemessen und in jedem Fall rechnerisch das Gewicht einer Einheitsdosis der Komponente bestimmt;

c) Es werden gleichzeitig oder aufeinanderfolgend die fehlenden Mengen der Dosen jeder der Komponenten vervollständigt, indem in den Behälter (2) eine Anzahl von Einheitsdosen übergeführt wird, die gleich ist den jeweiligen Ergebnissen der Teilungen jedes der Gewichte der fehlenden Mengen durch das Gewicht einer entsprechenden Einheitsdosis;

d) Es werden gegebenenfalls die Schritte b) und c) für eine oder mehrere der Komponenten wiederholt, wobei für jede der betroffenen Komponenten eine Einheitsöffnung des ihr zugeordneten Dosierventils (6, 12) vorgeschrieben wird, deren Amplitude und/oder Dauer kleiner ist (sind) als diejenige(n), die für die vorhergehende Einheitsöffnung für die genannte Komponente vorgeschrieben war(en), bis für jede betroffene Komponente eine Dosierung gegebener Genauigkeit erhalten wird.

2. Verfahren nach Patentanspruch 1, dadurch gekennzeichnet, dass der Vorgang der Bestimmung der Gewichte der Einheitsdosen der Komponenten vor dem Vorgang der groben Gewichtsdosierung der Komponenten durchgeführt wird.

3. Verfahren nach einem der vorhergehenden Patent-ansprüche, dadurch gekennzeichnet, dass ferner eine Endmessung des Gesamtgewichts des übergeführten Produkts durchgeführt wird und der erhaltene Wert mit dem geforderten Gewicht verglichen wird.

4. Dosiereinrichtung, dadurch gekennzeichnet, dass sie einen auf einer Waage (3) angeordneten Aufnahmebehälter (2) aufweist, mindestens eine mit einem Dosierventil (6, 12) versehene Komponten-Überführungsleitung (4), die an einem ihrer Enden mit einem Lagerbehälter (1) verbunden ist, während ihr anderes Ende über dem Aufnahmebehälter der Mischung angeordnet ist, und eine elektronische Vorrichtung (7) aufweist, die entsprechend dem Verfahren nach Patentanspruch 1 programmiert ist und mit der der Ventilsteuermechanismus sowie die Messvorrichtung der Waage verbunden sind.

5. Anlage nach Patentanspruch 4, dadurch gekennzeichnet, dass das Dosierventil ein Ventil mit progressiver Öffnung und Schliessung ist.

6. Anlage nach einem der Patentansprüche 4 oder 5, dadurch gekennzeichnet, dass sie eine Mehrzahl von Überführungsleitungen (4) aufweist, wobei jede derselben mit einem Dosierventil (6) versehen ist und die freien Enden jeder Leitung auf einem Dosierkopf (5) zusammengeführt sind, der über dem Aufnahmebehälter der Mischung angeordnet ist.

7. Anlage nach einem der Patentansprüche 4 bis 6, dadurch gekennzeichnet, dass die Komponente vom Lagerbehälter zum Aufnahmebehälter durch Schwerkraft übergeführt wird.

8. Anlage nach einem der Patentansprüche 4 bis 6, dadurch gekennzeichnet, dass die Komponente vom Lagerbehälter zum Aufnahmebehälter durch Einspritzung mit Hilfe einer Pumpe übergeführt wird.

9. Anlage nach einem der Patentansprüche 6 bis 8, dadurch gekennzeichnet, dass der Dosierkopf mit Ausstoss-Düsen ausgerüstet ist, deren Öffnung automatisch in Abhängigkeit von der Öffnung des entsprechenden Ventils gesteuert wird oder durch Druck der Komponente beim Öffnen des entsprechenden Ventils.

## Claims

1. A gravimetric dosing process for the industrial manufacture of a product with several liquid or pasty components by means of an installation comprising at least one dosing valve (6,12), characterized in that it comprises the following steps:

a) quantities of each component, lesser than the doses required for each component, are transferred successively into a container and the weight of each quantity of component transferred is measured before the transfer of the following component,

b) the weight of each component delivered through its associated dosing valve (6, 12) is measured successively during at least one unitary opening of a determined amplitude and duration, and the weight of a unitary dose of the component is determined by computation in each case,

c) the missing quantities of the doses of each of the components are completed simultaneously or successively by transferring, into the receiving container (2), the numbers of unitary doses equal to the respective results of the divisions of each of the weights of the missing quantities by the weight of one corresponding unitary dose,

d) steps b) and c) are optionally repeated for one or several of the components, by imposing for each one of the compounds concerned a unitary opening of the associated dosing valve (6,12) of an amplitude and/or a duration lesser than that/those imposed on the previous unitary opening for said component, until a dosing of a determined accuracy for each component concerned is attained.

2. A process according to claim 1, characterized in that the operation of determining the weights of the unitary doses of the components is carried out before the operation of approximate gravimetric dosing of the components.

3. A process according to any one of the preceding claims, characterized in that, further, a final measure of the total weight of the product transferred is carried out, and in that the value obtained is compared with the required weight.

4. A dosing installation, characterized in that it comprises a receiving container (2) disposed on a scale (3), at least one component transfer conduit (4) provided with a dosing valve (6,12), connected at one end to a storage container (1), its other end being positioned above the receiving container for the mixture, and an electronic device (7) programmed in accordance with the process of claim 1, to which are connected the control mechanism of the valve as well as the measuring device of the scale.

5. An installation according to claim 4, characterized in that the dosing valve is a progressively opening and closing valve.

6. An installation according to one of claims 4 or 5, characterized in that it comprises a plurality of transfer conduits (4), each one being provided with a dosing valve (6), the free ends of each conduit being grouped together on a dosing head (5) positioned above the receiving container of the mixture.

7. An installation according to one of claims 4 to 6, characterized in that the component is transferred from the storage container to the receiving container by gravity.

8. An installation according to one of claims 4 to 6, characterized in that the component is transferred from the storage container to the receiving container by injection, by means of a pump.

9. An installation according to one of claims 6 to 8, characterized in that the dosing head is equipped with ejection nozzles, the opening of which is controlled automatically by the electronic device (7) as a function of the opening of the corresponding valve or by pressure of the component at the opening of the corresponding valve.

# FIG. 1

EP 0 353 197 B1

FIG. 2

EP 0 353 197 B1